# EUROPEAN PATENT APPLICATION

(11) **EP 3 511 391 A1**
(43) Date of publication of application: **17.07.2019**
(21) Application number: 17848802.9
(22) Date of filing: 06.09.2017
(51) Int. Cl.: C09K 3/10, B32B 25/08, B32B 27/28, B60R 13/06, C09D 5/02, C09D 123/26

(54) **SEALING MATERIAL, PRODUCTION METHOD THEREFOR, AND COATING COMPOSITION FOR SEALING MATERIAL**

(30) Priority: 12.09.2016 JP 2016177711
(71) Applicant: Unitika Ltd., Amagasaki-shi, Hyogo 660-0824 (JP)
(72) Inventor: YANO, Takuma, Uji-shi Kyoto 611-0021 (JP)
(74) Representative: Vossius & Partner Patentanwälte Rechtsanwälte mbB
(86) International application number: PCT/JP2017/032114
(87) International publication number: WO 2018/047864

(57) **Abstract**

The present invention is to provide a sealing material which maintains performance such as an abnormal noise-preventing property, low friction property and water repellency even when it is repeatedly exposed to below freezing in a state where water is in contact. The present invention provides a sealing material, comprising: a sealing member containing an ethylene-propylene-based rubber, and a coating containing an acid-modified polyolefin resin having an unsaturated carboxylic acid content of 0.1 to 10% by mass, that is formed on at least a portion of the surface of the sealing member.

## Description

### TECHNICAL FIELD

The present invention relates to a sealing material, a method for producing the same, and a coating composition for a sealing material.

### BACKGROUND ART

A vehicle, such as a railway vehicle and an automobile, is provided with a sealing material for sealing gaps, holes and the like provided in the vehicle, to prevent rain, wind, sound and the like from entering the vehicle. From the viewpoint of weather resistance, ozone resistance, heat resistance and the like, an ethylene-propylene-based rubber is suitably used for a vehicle sealing material. As the vehicle sealing material, there are known some materials with a surface coated with a coating material, for imparting performance such as abnormal noise-preventing property, low friction property, water repellency, and anti-blocking property.

Among the vehicle sealing materials, a weather strip is likely to generate noise and friction caused by rubbing of the contact surfaces due to vibration when opening and closing doors and trunk lids and vibration during driving. Therefore, performance such as abnormal noise-preventing property and low friction property is particularly required for the weather strip. The weather strip is also required to have water repellency for suppressing the invasion of water from outside the vehicle due to rain or the like. On the other hand, the sealing material is used in a wide variety of applications while it is for vehicles, and depending on the application, performance such as abnormal noise-preventing property, low friction property and water repellency may be required as with for vehicles.

As a coating material used for a vehicle sealing material such as a weather strip, coating materials comprising a urethane resin and/or a silicone resin having adhesive property to ethylene-propylene-based rubber, abnormal noise-preventing property, low friction property, water repellency and heat resistance are disclosed (Patent Literatures 1 and 2).

### CITATIONS LIST

### PATENT LITERATURES

Patent Literature 1: JP 2009-001710 A
Patent Literature 2: JP 2006-525416 B

### SUMMARY OF INVENTION

### TECHNICAL PROBLEMS

However, when the sealing material coated with a coating material comprising a urethane resin and/or a silicone resin is repeatedly exposed to an environment below freezing in a state where water is in contact (in a state of being wet with water), it raises a new problem of deteriorating performance such as abnormal noise-preventing property, low friction property and water repellency, that are the purpose of coating. Furthermore, a problem related to the heat resistant abnormal noise-preventing property, that is, abnormal noise-preventing property deteriorates when exposed to a high temperature environment of about 50°C, has been also newly found.

It is an object of the present invention to provide a sealing material which maintains performance such as an abnormal noise-preventing property, low friction property and water repellency even when it is repeatedly exposed to below freezing in a state where water is in contact.

It is also an object of the present invention to provide a sealing material which maintains performance such as abnormal noise-preventing property, low friction property and water repellency even when it is repeatedly exposed to below freezing in a state where water is in contact, and is also excellent in heat resistant abnormal noise-preventing property.

### SOLUTIONS TO PROBLEMS

As a result of intensive studies to solve the above problems, the present inventors have found that the above problem can be solved by providing a coating containing a specific acid-modified polyolefin resin on the surface of a sealing material containing an ethylene-propylene-based rubber, and reached the present invention.

That is, the gist of the present invention is as follows.
<1> A sealing material, comprising:
   a sealing member containing an ethylene-propylene-based rubber, and
   a coating containing an acid-modified polyolefin resin having an unsaturated carboxylic acid content of 0.1 to 10% by mass, that is formed on at least a portion of the surface of the sealing member.
<2> The sealing material of <1>, wherein the acid-modified polyolefin resin contains a (meth)acrylic ester component as a copolymerization component.
<3> The sealing material of <2>, wherein a content of the (meth)acrylic ester component is 1 to 45% by mass of the acid-modified polyolefin resin.
<4> The sealing material of any one of <1> to <3>, wherein the coating further contains a crosslinking agent and/or other resin.
<5> The sealing material of <4>, wherein the other resin contains a polyurethane resin and/or a silicone resin.
<6> The sealing material of <4>, wherein the other resin contains an aliphatic polyether polyurethane resin and/or an aliphatic polycarbonate polyurethane resin.
<7> The sealing material of any one of <4> to <6>, wherein a content of the other resin is 1 to 99% by mass, based on 100% by mass of the sum of the acid-modified polyolefin resin and the other resin.
<8> The sealing material of any one of <4> to <7>, wherein a content of the crosslinking agent is from 0.2 to 30% by mass, based on 100% by mass of the sum of the acid-modified polyolefin resin, the crosslinking agent, and the other resin.
<9> The sealing material of any one of <1> to <8>, wherein the coating is a coating film of an aqueous dispersion containing the acid-modified polyolefin resin having an unsaturated carboxylic acid content of 0.1 to 10% by mass.
<10> The sealing material of any one of <1> to <9>, wherein the sealing material is a vehicle sealing material.
<11> The sealing material of any one of <1> to <10>, wherein the acid-modified polyolefin resin comprises one or more kinds of monomers selected from alkenes having 2 to 4 carbon atoms and one or more monomers selected from acrylic acid, methacrylic acid, maleic acid, maleic anhydride and mixtures thereof, as copolymerization components.
<12> A method for producing a sealing material, comprising:
   coating an aqueous dispersion containing an acid-modified polyolefin resin having an unsaturated carboxylic acid content of 0.1 to 10% by mass, on at least a portion of the surface of a sealing member containing an ethylene-propylene-based rubber.
<13> A coating composition for a sealing material containing an ethylene-propylene-based rubber,
   which is an aqueous dispersion containing an acid-modified polyolefin resin having an unsaturated carboxylic acid content of 0.1 to 10% by mass and an aqueous medium.
<14> The coating composition for a sealing material of <13>, wherein the acid-modified polyolefin resin contains a (meth)acrylic ester component as a copolymerization component.
<15> The coating composition for a sealing material of <14>, wherein a content of the (meth)acrylic ester component is 1 to 45% by mass of the acid-modified polyolefin resin.
<16> The coating composition for a sealing material of any one of <13> to <15>, wherein the coating composition for a sealing material further contains a crosslinking agent and/or other resin.
<17> The coating composition for a sealing material of <16>, wherein the other resin contains a polyurethane resin and/or a silicone resin.
<18> The coating composition for a sealing material of <16>, wherein the other resin contains an aliphatic polyether polyurethane resin and/or an aliphatic polycarbonate polyurethane resin.
<19> The coating composition for a sealing material of any one of <16> to <18>, wherein a content of the other resin component is 1 to 99% by mass, based on 100% by mass of the sum of the acid-modified polyolefin resin and the other resin.
<20> The coating composition for a sealing material of any one of <16> to <19>, wherein a content of the crosslinking agent is from 0.2 to 30% by mass, based on 100% by mass of the sum of the acid-modified polyolefin resin, the crosslinking agent, and the other resin.
<21> The coating composition for a sealing material of any one of <13> to <20>, wherein the acid-modified polyolefin resin comprises one or more kinds of monomers selected from alkenes having 2 to 4 carbon atoms, and one or more monomers selected from acrylic acid, methacrylic acid, maleic acid, maleic anhydride and mixtures thereof, as copolymerization components.

### ADVANTAGEOUS EFFECTS OF INVENTION

The sealing material of the present invention is excellent in abnormal noise-preventing property against abnormal noise generated, for example, by opening, closing or rubbing an opening/closing member of an opening part, low friction property and water repellency, and can suppress deterioration of the performance even when repeatedly exposed to below freezing in a state where water is in contact (hereinafter, this performance may be referred to as "performance retention under freezing"). In the present specification, "performance retention under freezing" refers to a property that one or more performances of adhesive property, abnormal noise-preventing property, low friction property and water repellency are retained even by freezing.

The sealing material of the present invention can suppress deterioration of abnormal noise-preventing property even when exposed to a high temperature environment of about 50°C and is also excellent in heat resistant abnormal noise-preventing property.

### DESCRIPTION OF EMBODIMENTS

### [Sealing Material]

The sealing material is a material intended to seal a gap and/or a hole, etc. provided in a structure. For example, the sealing material may be a part that achieves sealing of a gap by being disposed in the gap between two or more structures, or may be a part that achieves sealing of a hole by being disposed in the hole in one structure.

Hereinafter, the present invention will be described in detail.

The sealing material of the present invention has a coating containing an acid-modified polyolefin resin containing a specific amount of an unsaturated carboxylic acid on at least a portion of the surface of a sealing member formed by a composition containing an ethylene-propylene-based rubber.

The acid-modified polyolefin resin contains an olefin component as a main component. As the olefin component, alkenes having 2 to 6 carbon atoms such as ethylene, propylene, isobutylene, 2-butene, 1-butene, 1-pentene and 1-hexene are preferable, and mixtures thereof may be used. Among them, alkenes having 2 to 4 carbon atoms such as ethylene, propylene, isobutylene and 1-butene are more preferable, from the viewpoint of adhesive property to ethylene-propylene-based rubber and ease of polymerization of the resin. Ethylene and/or propylene are particularly preferable, and ethylene is further preferable, from the viewpoint of further improving abnormal noise-preventing property and low friction property, and performance retention under freezing related to these properties.

The content of the olefin component is not particularly limited as long as the content of the unsaturated carboxylic acid component is within the range described later, and is preferably 45 to 99.9% by mass, more preferably 55 to 99.8% by mass, particularly preferably 60 to 99.7% by mass, further preferably 70 to 99.5% by mass, and most preferably 80 to 99.0% by mass of the acid-modified polyolefin resin. When the content of the olefin component is out of the above range, adhesive property to the ethylene-propylene-based rubber, abnormal noise-preventing property, low friction property and water repellency deteriorate in some cases. The content of the olefin component is a value based on the acid-modified polyolefin resin, that is, a value based on the sum of all the copolymerization components constituting the acid-modified polyolefin resin. The acid-modified polyolefin resin may contain one or more kinds of olefin components as copolymerization components. When two or more kinds of olefin components are used as olefin components, the total amount thereof may fall within the above range.

It is necessary that the acid-modified polyolefin resin contain an unsaturated carboxylic acid component as a copolymerization component, from the viewpoint of improving adhesive property to ethylene-propylene-based rubber, and performance retention under freezing related to abnormal noise-preventing property, low friction property and water repellency, as well as facilitating processing into an aqueous dispersion described later. It is necessary that the content of the unsaturated carboxylic acid component be 0.1 to 10% by mass of the acid-modified polyolefin resin. The lower limit of the content is preferably 0.2% by mass or more, more preferably 0.5% by mass or more, particularly preferably 1% by mass or more, and further preferably 2% by mass or more, from the viewpoint of adhesive property and processability into an aqueous dispersion. The upper limit of the content is preferably 8% by mass or less, more preferably 6% by mass or less, particularly preferably 5% by mass or less, and further preferably 4% by mass or less, from the viewpoint of performance retention under freezing related to abnormal noise-preventing property, low friction property and water repellency, and the like. When the content of the unsaturated carboxylic acid component is less than 0.1% by mass, adhesive property to ethylene-propylene-based rubber, performance retention under freezing related to abnormal noise-preventing property, low friction property and water repellency tend to deteriorate, and it is difficult to process into an aqueous dispersion. On the other hand, when the content exceeds 10% by mass, abnormal noise-preventing property and low friction property, performance retention under freezing related to these properties and water repellency, and heat resistant abnormal noise-preventing property tend to deteriorate. The content of the unsaturated carboxylic acid component is a value based on the acid-modified polyolefin resin, that is, a value based on the sum of all the copolymerization components constituting the acid-modified polyolefin resin. The acid-modified polyolefin resin contains one or more kinds of unsaturated carboxylic acid components as copolymerization components. When two or more kinds of unsaturated carboxylic acid components are used as the unsaturated carboxylic acid component, the total amount thereof may fall within the above range.

Examples of the unsaturated carboxylic acid component include half esters and half amides of unsaturated dicarboxylic acids, in addition to acrylic acid, methacrylic acid, maleic acid, maleic anhydride, itaconic acid, itaconic anhydride, fumaric acid, crotonic acid, and the like. Among them, acrylic acid, methacrylic acid, maleic acid, maleic anhydride or a mixture thereof is preferable, and maleic acid or maleic anhydride is further preferable. In the present specification, when it is described as "(anhydrous) maleic acid", it is used to mean maleic acid and/or maleic anhydride. The same applies to other acids.

The unsaturated carboxylic acid component may be copolymerized with the olefin component, and the form thereof is not limited. Examples of the configuration of copolymerization of the unsaturated carboxylic acid component include random copolymerization, block copolymerization, graft copolymerization (graft modification), and the like.

Since the acid-modified polyolefin resin is further copolymerized with an additional component (monomer component), in addition to the olefin component and the unsaturated carboxylic acid component, adhesive property to ethylene-propylene-based rubber, abnormal noise-preventing property and low friction property, and performance retention under freezing related to these properties can be further improved.

Specific examples of the additional component include (meth)acrylic esters ((meth)acrylic ester components) such as methyl (meth)acrylate, ethyl (meth)acrylate, propyl (meth)acrylate and butyl (meth)acrylate, maleic acid diesters such as dimethyl maleate, diethyl maleate and dibutyl maleate, alkyl vinyl ethers such as methyl vinyl ether and ethyl vinyl ether, vinyl esters such as vinyl formate, vinyl acetate, vinyl propionate, vinyl pivalate and vinyl versatate, vinyl alcohols obtained by saponifying vinyl esters with a basic compound or the like, (meth)acrylic amides and the like, and mixtures thereof. Among them, (meth)acrylic esters such as methyl (meth)acrylate, ethyl (meth)acrylate, propyl (meth)acrylate and butyl (meth)acrylate, and vinyl ester components such as vinyl formate, vinyl acetate, vinyl propionate, vinyl pivalate and vinyl versatate are preferable. (Meth)acrylic esters such as methyl (meth)acrylate, ethyl (meth)acrylate, propyl (meth)acrylate and butyl (meth)acrylate are more preferable. Here, "(meth)acrylic acid" means "acrylic acid and/or methacrylic acid", and, for example, "ethyl (meth)acrylate" means "ethyl acrylate and/or ethyl methacrylate".

The above-described additional component may be copolymerized in the acid-modified polyolefin resin, and the form thereof is not limited. Examples of the configuration of copolymerization of the additional component include random copolymerization, block copolymerization, graft copolymerization (graft modification), and the like.

The acid-modified polyolefin resin preferably contains the above-described (meth)acrylic esters as the additional component (monomer component), from the viewpoint of further improving abnormal noise-preventing property, low friction property and water repellency, performance retention under freezing related to these properties, and heat resistant abnormal noise-preventing property.

The content of additional component in the acid-modified polyolefin resin is not particularly limited as long as the content of the unsaturated carboxylic acid component is within the above-described range, and is preferably 1 to 45% by mass of the acid-modified polyolefin resin. The lower limit of the content of the additional component is more preferably 2% by mass or more, particularly preferably 3% by mass, and further preferably 4% by mass or more. The upper limit of the content is more preferably 30% by mass or less, particularly preferably 20% by mass or less, further preferably 15% by mass or less, and most preferably 10% by mass or less. The content of the additional component is a value based on the acid-modified polyolefin resin, that is, a value based on the sum of all the copolymerization components constituting the acid-modified polyolefin resin. When two or more different kinds of additional components are used as the additional component, the total amount thereof may fall within the above range. In particular, when (meth)acrylic esters are used as the additional component, the content of the (meth)acrylic esters preferably falls within the above range.

Specific examples of the acid-modified polyolefin resin in the present invention include ethylene-(meth)acrylic ester-(anhydrous) maleic acid copolymer, propylene-(meth)acrylic ester-(anhydrous) maleic acid copolymer, ethylene-propylene-(meth)acrylic ester-(anhydrous) maleic acid copolymer, ethylene-butene-(meth)acrylic ester-(anhydrous) maleic acid copolymer, propylene-butene-(meth)acrylic ester-(anhydrous) maleic acid copolymer, ethylene-propylene-butene-(meth)acrylic ester-(anhydrous) maleic acid copolymer, ethylene-acrylic acid copolymer, ethylene-methacrylic acid copolymer, propylene-acrylic acid copolymer, propylene-methacrylic acid copolymer, ethylene-propylene-acrylic acid copolymer, ethylene-propylene-methacrylic acid copolymer, ethylene-(anhydrous) maleic acid copolymer, propylene-(anhydrous) maleic acid copolymer, ethylene-propylene-(anhydrous) maleic acid copolymer, ethylene-butene-(anhydrous) maleic acid copolymer, propylene-butene-(anhydrous) maleic acid copolymer, ethylene-propylene-butene-(anhydrous) maleic acid copolymer, ethylene-vinyl acetate-(anhydrous) maleic acid copolymer, ethylene-vinyl acetate-(anhydrous) maleic acid copolymer, mixtures thereof, and the like. From the viewpoint of further improving adhesive property, abnormal noise-preventing property, low friction property and water repellency, performance retention under freezing related to these properties, and heat resistant abnormal noise-preventing property, one or more kinds of polymers selected from the group consisting of ethylene-(meth)acrylic ester-(anhydrous) maleic acid copolymer, propylene-(meth)acrylic ester-(anhydrous) maleic acid copolymer, ethylene-propylene-(meth)acrylic ester-(anhydrous) maleic acid copolymer, an ethylene-acrylic acid copolymer, an ethylene-methacrylic acid copolymer, a propylene-acrylic acid copolymer, a propylene-methacrylic acid copolymer, an ethylene-propylene-acrylic acid copolymer, an ethylene-propylene-methacrylic acid copolymer, ethylene-(anhydrous) maleic acid copolymer, propylene-(anhydrous) maleic acid copolymer and ethylene-propylene-(anhydrous) maleic acid copolymer are preferable. Among them, ethylene-(meth)acrylic ester-(anhydrous) maleic acid copolymer is more preferable, from the same viewpoint.

The melting point of the acid-modified polyolefin resin in the present invention is preferably 50°C or more, more preferably 60 to 250°C, and particularly preferably 80 to 200°C, from the viewpoint of heat resistant abnormal noise-preventing property.

The weight average molecular weight of the acid-modified polyolefin resin is preferably from 10,000 to 100,000, more preferably from 20,000 to 70,000, particularly preferably from 35,000 to 50,000, and further preferably from 40,000 to 50,000, from the viewpoint of further improving not only adhesive property to ethylene-propylene-based rubber and ease of processing into an aqueous dispersion, but also abnormal noise-preventing property, low friction property and water repellency, performance retention under freezing related to these properties, and heat resistant abnormal noise-preventing property. When the weight average molecular weight is less than 10,000, performance retention under freezing tends to decrease. On the other hand, when the weight average molecular weight exceeds 100,000, adhesive property to ethylene-propylene-based rubber tends to decrease, and processing into an aqueous dispersion tends to be difficult.

In the case where the acid-modified polyolefin resin is hardly soluble in a solvent, and thus it is difficult to measure the molecular weight, the melt flow rate value indicating the fluidity of the molten resin may be used as a measure of the molecular weight.

The melt flow rate value (190°C, 2.16 kg load according to JIS K7210: 1999) of the acid-modified polyolefin resin is preferably 1 to 500 g/10 min., more preferably 2 to 200 g/10 min., particularly preferably from 3 to 80 g/10 min., and further preferably from 3 to 10 g/10 min., from the viewpoint of further improving not only adhesive property to ethylene-propylene-based rubber and ease of processing into an aqueous dispersion, but also abnormal noise-preventing property, low friction property and water repellency, performance retention under freezing related to these properties, and heat resistant abnormal noise-preventing property.

The acid-modified polyolefin resin in the present invention is not particularly required to be chlorinated for the purpose of improving adhesive property and water dispersibility, and it is preferable not to contain a chlorinated acid-modified polyolefin resin, from the viewpoint of performance, environmental conservation, and simplification of the production process. However, as required for its purpose of use, the acid-modified polyolefin resin may be chlorinated. The chlorination can be carried out by dissolving the acid-modified polyolefin resin in a chlorinated solvent and then blowing gaseous chlorine while irradiating ultraviolet rays or in the presence of a radical generator.

Next, the ethylene-propylene-based rubber forming the sealing member in the sealing material of the present invention will be described. The ethylene-propylene-based rubber is a copolymer rubber containing at least ethylene and propylene as copolymerization components. The ethylene-propylene-based rubber is generally obtained by blowing a mixed gas of ethylene and propylene into a hydrocarbon solvent containing a Ziegler catalyst to copolymerize. Specifically, example of the ethylene-propylene-based rubber include ethylene-propylene rubber (EPM) composed of ethylene and propylene, ethylene-propylene-diene rubber (EPDM) obtained by introducing at least one kind of non-conjugated diene as a third component in addition to ethylene and propylene, and the ethylene-propylene-diene rubber can be suitably used since it is excellent in properties necessary for sealing materials, such as weather resistance, ozone resistance, and heat resistance. These ethylene-propylene-based rubbers may be used singly or in combination.

Examples of the non-conjugated diene as the third component include dicyclopentadiene, methylene norbornene, ethylidene norbornene, 1,4-hexadiene, cyclooctadiene, and mixtures thereof.

There are no particular restrictions on the properties such as type and proportion of each copolymerization component, molecular weight, and Mooney viscosity of the ethylene-propylene-based rubber in the present invention, and known ones can be used. In addition, the ethylene-propylene-based rubber may be vulcanized or unvulcanized. Vulcanized ethylene-propylene-based rubber can generally be vulcanized by the following method. For example, in the case of ethylene-propylene rubber, it can be vulcanized by a peroxide, and in the case of ethylene-propylene-diene rubber, it can be vulcanized by a peroxide or sulfur. In the case of a vulcanized rubber, a vulcanization accelerator and/or a vulcanization aid may be added. Further, the ethylene-propylene-based rubber may appropriately contain a filler, a softener, an antioxidant, a stabilizer, a dispersant, a lubricant, a flame retardant, an antioxidant, carbon black, process oil, and the like.

The sealing member constituting the sealing material of the present invention is formed by a composition containing the above-described ethylene-propylene-based rubber. The composition may be a simple ethylene-propylene-based rubber, or may be a composition mixed with other rubber components, resin components, additives or the like, in addition to the ethylene-propylene-based rubber. In the case of the mixed composition, the content of the ethylene-propylene-based rubber is not particularly limited, and is preferably 10% by mass or more, more preferably 30% by mass or more, particularly preferably 50% by mass or more, further preferably 70% by mass or more, and most preferably 90% by mass or more, based on 100% by mass of the composition, from the viewpoint of adhesive property to the coating.

The sealing material of the present invention needs to have a coating containing an acid-modified polyolefin resin on at least a portion of the surface of the sealing member. The sealing material may have a coating on the entire surface of the sealing member or may have a coating on a portion of the surface. However, in the case where the sealing material has a coating on a portion of the surface, it is preferred that the sealing material has a coating in a portion (region) where the sealing material comes into contact with the object to be sealed such as the periphery of the vehicle opening part and/or the opening part opening/closing member.

The coating of the present invention has the effect of the present invention even when it is a thin coating. Specific thickness is preferably in the range of 0.3 to 200 µm, from the viewpoint of further improving abnormal noise-preventing property, low friction property and water repellency, performance retention under freezing related to these properties, and heat resistant abnormal noise-preventing property. The lower limit of the thickness is more preferably 0.5 µm or more, further preferably 1 µm or more, particularly preferably 2 µm or more, further preferably 5 µm or more, and most preferably 10 µm or more, from the same viewpoint as above. The upper limit of the thickness is more preferably 150 µm or less, further preferably 100 µm or less, particularly preferably 70 µm or less, and most preferably 50 µm or less, from the same viewpoint as above.

The coating of the present invention contains an acid-modified polyolefin resin, and may be composed solely of an acid-modified polyolefin resin alone, or may contain, in addition to an acid-modified polyolefin resin, other resin component, crosslinking agents, additives and the like, within the range not detracting from the effect of the present invention. The coating preferably contains at least one of other resin or crosslinking agent, and more preferably contains both of them, from the viewpoint of further improving abnormal noise-preventing property, low friction property and water repellency, performance retention under freezing related to these properties, and heat resistant abnormal noise-preventing property.

Examples of preferred other resin components include polyester resins, polyvinyl acetate, ethylene-vinyl acetate copolymers, polyvinyl chloride, polyvinylidene chloride, ethylene-(meth)acrylic acid copolymers, styrene-maleic acid resins, styrene-butadiene resins, butadiene resins, acrylonitrile-butadiene resins, poly(meth)acrylonitrile resins, (meth)acrylamide resins, non-acid-modified polyethylene resins, chlorinated polyethylene resins, chlorinated polypropylene resins, modified nylon resins, rosin-based, terpene-based or other tackifying resins, phenolic resins, epoxy resins, polyurethane resins, silicone resins, and the like. As necessary, a plurality of other resin components may be mixed and used. Further, the other resin may be subjected to modification such as siloxane modification. Among them, the other resin is preferably a polyurethane resin and/or a silicone resin, and more preferably a polyurethane resin, from the viewpoint of further improving abnormal noise-preventing property, low friction property and water repellency, performance retention under freezing related to these properties and heat resistant abnormal noise-preventing property when combined with an acid-modified polyolefin resin.

The polyurethane resin is a polymer containing a urethane bond in the main chain, and in detail, one obtained by a reaction of a polyol compound such as a polyether polyol (particularly polyether diol), a polyester polyol (particularly polyester diol) or a polycarbonate polyol (particularly polycarbonate diol) with a polyisocyanate compound.

Examples of the polyol compound include polyether polyols such as polyethylene glycol, polypropylene glycol, polytetramethylene ether glycol and polyhexamethylene ether glycol, polyester polyols such as polyethylene adipate, polybutylene adipate, polyneopentyl adipate, poly-3-methylpentyl adipate, polyethylene/butylene adipate and polyneopentyl/hexyl adipate, polylactone polyols such as polycaprolactone diol, and polycarbonate polyol. The polyol compound is preferably a polyether polyol or a polycarbonate polyol, from the viewpoint of further improving abnormal noise-preventing property, low friction property and water repellency, performance retention under freezing related to these properties and heat resistant abnormal noise-preventing property, and more preferably a polyether polyol, from the viewpoint of further improving water repellency.

On the other hand, as the polyisocyanate compound, it is possible to use one kind or a mixture of two or more kinds of known aromatic, aliphatic and alicyclic polyisocyanates. Specific examples of the polyisocyanate compound include aromatic polyisocyanate compounds such as tolylene diisocyanate, 4,4'-diphenylmethane diisocyanate, 1,3-phenylene diisocyanate, xylylene diisocyanate, 1,5-naphthylene diisocyanate, triphenylmethane triisocyanate and polymethylene polyphenyl isocyanate, aliphatic polyisocyanate compounds such as hexamethylene diisocyanate, lysine diisocyanate, dimer diisocyanate obtained by converting carboxyl groups of a dimer acid (dimer of unsaturated fatty acid)into isocyanate groups, alicyclic polyisocyanate compounds such as isophorone diisocyanate, hydrogenated 4,4'-diphenylmethane diisocyanate and hydrogenated tolylene diisocyanate, adducts, biurets and isocyanurates thereof, and the like. Also, tri- or polyfunctional polyisocyanates may be mixed in the diisocyanates. The polyisocyanate compound is preferably an aliphatic polyisocyanate compound, particularly from the viewpoint of further improving water repellency.

The polyurethane resin is preferably used as an aqueous solution or aqueous dispersion as described later. Therefore, the polyurethane resin is preferably water-soluble or water-dispersible. It is preferred that the polyurethane resin has an anionic group, in terms of dispersibility in an aqueous medium. An anionic group is a functional group which becomes an anion in an aqueous medium, and is, for example, a carboxyl group, a sulfonic acid group, a sulfuric acid group, a phosphoric acid group, or the like. Among them, it is preferred that the polyurethane resin has a carboxyl group.

In order to introduce an anionic group into the polyurethane resin, a polyol component having a carboxyl group, a sulfonic acid group, a sulfate group, a phosphate group or the like may be used. Examples of the polyol compound having a carboxyl group include 3,5-dihydroxybenzoic acid, 2,2-bis(hydroxymethyl)propionic acid, 2,2-bis(hydroxyethyl)propionic acid, 2,2-bis(hydroxypropyl)propionic acid, bis(hydroxymethyl)acetic acid, bis(4-hydroxyphenyl)acetic acid, 2,2-bis(4-hydroxyphenyl)pentanoic acid, dimethylolacetic acid, dimethylolbutanoic acid, dimethylolpropionic acid, dimethylolbutyric acid, tartaric acid, N,N-dihydroxyethyl glycine, N,N-bis(2-hydroxyethyl)-3-carboxyl-propionamide, and the like.

The molecular weight of the polyurethane resin can also be appropriately adjusted by using a chain extender. Examples of the chain extender include compounds having two or more active hydrogens such as amino groups and/or hydroxyl groups capable of reacting with isocyanate groups, and, for example, diamine compounds, dihydrazide compounds and glycols can be used.

Examples of the diamine compound include ethylenediamine, propylenediamine, hexamethylenediamine, triethyltetramine, diethylenetriamine, isophoronediamine, dicyclohexylmethane-4,4'-diamine, and the like. In addition, examples include diamines having a hydroxyl group such as N-2-hydroxyethylethylenediamine and N-3-hydroxypropylethylenediamine, dimer diamines obtained by converting carboxyl groups of a dimer acid into amino groups, and the like. Further, examples include diamine-type amino acids such as glutamic acid, asparagine, lysine, diaminopropionic acid, ornithine, diaminobenzoic acid, diaminobenzenesulfonic acid, and the like.

Examples of the dihydrazide compound include saturated aliphatic dihydrazides having 2 to 18 carbon atoms, such as oxalic acid dihydrazide, malonic acid dihydrazide, succinic acid dihydrazide, glutaric acid dihydrazide, adipic acid dihydrazide, and sebacic dihydrazide; unsaturated dihydrazides such as maleic acid dihydrazide, fumaric acid dihydrazide, itaconic acid dihydrazide, and phthalic acid dihydrazide; carbonic dihydrazide; carbodihydrazide; thiocarbodihydrazide; and the like.

The glycols for use can be appropriately selected from the above-mentioned polyols.

The polyurethane resin in the present invention is preferably an aliphatic polyether polyurethane resin or an aliphatic polycarbonate polyurethane resin, and more preferably an aliphatic polyether polyurethane resin, from the viewpoint of further improving low friction property and water repellency and performance retention under freezing related to these properties. From the same viewpoint as above, a mixture of an aliphatic polyether polyurethane resin and an aliphatic polycarbonate polyurethane resin is further preferable.

The aliphatic polyurethane resin refers to a polyurethane resin containing an aliphatic polyisocyanate compound as a polyisocyanate compound. The aromatic polyurethane resin refers to a polyurethane resin containing an aromatic polyisocyanate compound as a polyisocyanate compound. The polyether polyurethane resin refers to a polyurethane resin containing a polyether polyol as a polyol compound. The polycarbonate polyurethane resin refers to a polyurethane resin containing a polycarbonate polyol as a polyol compound. Accordingly, the aromatic polyether polyurethane resin refers to a polyurethane resin containing an aromatic polyisocyanate compound as a polyisocyanate compound and a polyether polyol as a polyol compound. The aliphatic polyether polyurethane resin refers to a polyurethane resin containing an aliphatic polyisocyanate compound as a polyisocyanate compound and a polyether polyol as a polyol compound. The aliphatic polycarbonate polyurethane resin refers to a polyurethane resin containing an aliphatic polyisocyanate compound as a polyisocyanate compound and a polycarbonate polyol as a polyol compound.

When a polyurethane resin is used as an aqueous solution or an aqueous dispersion, a commercial product may be used, or a polyurethane resin may be processed into an aqueous solution or an aqueous dispersion and used. As the commercial product of the polyurethane resin, for example, an aqueous dispersion of an aromatic polyether polyurethane resin (SUPERFLEX 870, made by DKS Co. Ltd.), an aqueous dispersion of an aliphatic polyether polyurethane resin (VONDIC 2260NE, made by DIC Corporation) and an aqueous dispersion of an aliphatic polycarbonate polyurethane resin (Sancure PC-55, made by The Lubrizol Corporation) are available. The method of processing into an aqueous solution or aqueous dispersion is not particularly limited, and a known method can be adopted.

The silicone resin is a resin having a main skeleton by siloxane bond. The silicone resin may have a side chain such as an alkyl group and/or an aryl group. As the silicone resin, one modified by introducing a reactive functional group can also be suitably used. Examples of the modification treatment include amino-modified, carbinol-modified, epoxy-modified, carboxylic-modified, alkyl-modified, ether-modified, and the like.

The silicone resin is also preferably used as an aqueous solution or an aqueous dispersion. Therefore, the silicone resin is preferably water-soluble or water-dispersible.

The silicone resin can be obtained as a commercial product. As the commercial product of the silicone resin, for example, an aqueous dispersion of a silicone resin (silicone emulsion KM-9739, made by Shin-Etsu Chemical Co., Ltd.) is available.

The content of the other resin components is preferably in the range of 1 to 99% by mass, based on 100% by mass of the sum of the acid-modified polyolefin resin and the other resin components, from the viewpoint of further improving abnormal noise-preventing property, low friction property and water repellency, performance retention under freezing related to these properties and heat resistant abnormal noise-preventing property. From the same viewpoint as described above, the lower limit of the content is more preferably 2% by mass or more, and particularly preferably 5% by mass or more. On the other hand, the upper limit of the content is more preferably 98% by mass or less, particularly preferably 95% by mass or less, and most preferably 90% by mass or less, from the same viewpoint as above. When two or more other kinds of resins are used as the other resin, the total amount thereof may fall within the above range. In particular, when a polyurethane resin and/or a silicone resin is used as the other resin, the total content of these resins preferably falls within the above range.

As the crosslinking agent, a crosslinking agent having in the molecule a plurality of functional groups reactive with a carboxyl group contained in the acid-modified polyolefin resin, a metal complex having a multivalent coordination or the like can be used. Specific examples thereof include oxazoline-based crosslinking agents, isocyanate-based crosslinking agents (including block type), amine-based crosslinking agents, carbodiimide-based crosslinking agents, melamine-based crosslinking agents, urea-based crosslinking agents, epoxy-based crosslinking agents, zirconium salt compounds, silane coupling agents, organic peroxides, and the like.

Among them, the crosslinking agent having in the molecule a plurality of functional groups reactive with a carboxyl group is more preferable, from the viewpoint of further improving abnormal noise-preventing property, low friction property and water repellency, performance retention under freezing related to these properties and heat resistant abnormal noise-preventing property. Examples of such crosslinking agent include oxazoline-based crosslinking agents, carbodiimide-based crosslinking agents, epoxy-based crosslinking agents, isocyanate-based crosslinking agents (including block type), amine-based crosslinking agents, melamine-based crosslinking agents, and the like. Among them, carbodiimide-based crosslinking agents and isocyanate-based crosslinking agents (including block type) are preferable. A plurality of crosslinking agents may be used in combination.

The content of the crosslinking agent is preferably in the range of 0.2 to 30% by mass, more preferably 0.5 to 25% by mass, particularly preferably 1 to 20% by mass, and further preferably 2 to 15% by mass, based on 100% by mass of the sum of the acid-modified polyolefin resin and the crosslinking agent, from the viewpoint of further improving abnormal noise-preventing property, low friction property and water repellency, performance retention under freezing related to these properties and heat resistant abnormal noise-preventing property. When the crosslinking agent is contained in the mixture of the acid-modified polyolefin resin and the other resin components, from the viewpoint of the same as above, the content of the crosslinking agent is preferably in the range of 0.2 to 30% by mass, more preferably 0.5 to 25% by mass, particularly preferably 1 to 20% by mass, and further preferably 2 to 15% by mass, based on 100% by mass of the sum of the acid-modified polyolefin resin, the crosslinking agent, and other resin components. When two or more kinds of crosslinking agents are used as the crosslinking agent, the total amount thereof may fall within the above range.

As additives, various agents such as a lubricant such as siloxane, an anti-blocking agent, inorganic particles, a pigment, a dye, a wax, an ultraviolet absorber, a light stabilizer, a thickener, a weathering agent and a flame retardant may be appropriately contained. The additives may be used alone or in combination of two or more.

### [Method for Producing Sealing Material]

The sealing material of the present invention can be produced by forming a coating by coating an acid-modified polyolefin resin on at least a portion of the surface of a formed article (that is, a sealing member or a sealing material precursor) comprising a composition containing an ethylene-propylene-based rubber. Examples of the method for coating an acid-modified polyolefin resin includes a method of coating an acid-modified polyolefin resin by melt extrusion, a method of coating a solvent solution containing an acid-modified polyolefin resin, a method of coating an aqueous dispersion containing an acid-modified polyolefin resin, and the like. Among them, it is preferable to adopt the method of coating an aqueous dispersion containing an acid-modified polyolefin resin, from the viewpoint that the coating is easily adjusted to the preferred thickness of the present invention, and from the viewpoint of abnormal noise-preventing property, low friction property, cost, workability, and environmental conservation.

Next, an aqueous dispersion containing an acid-modified polyolefin resin will be described.

The aqueous dispersion containing an acid-modified polyolefin resin (hereinafter sometimes referred to simply as "aqueous dispersion") used in the present invention is a coating composition for a sealing material, and is an aqueous dispersion containing the above-described acid-modified polyolefin resin and aqueous medium.

In the aqueous dispersion, the acid-modified polyolefin resin is dispersed in an aqueous medium, and the aqueous dispersion may further contain one or more kinds of compounding agents selected from the above-described other resins, crosslinking agents, additives and the like. The concentration of the acid-modified polyolefin resin in the aqueous dispersion is usually adjusted according to the desired thickness of the coating, and may be, for example, 1 to 50% by mass, preferably 5 to 40% by mass, and more preferably 5 to 30% by mass. Each compounding agent may independently be dissolved in an aqueous medium or may be dispersed. The concentrations of compounding agents such as the other resins, crosslinking agents and additives in the aqueous dispersion each may be a concentration so that the content of each compounding agent described above is achieved.

The acid-modified polyolefin resin in the present invention can be processed into an aqueous dispersion by being dispersed in an aqueous medium. As a method for producing the aqueous dispersion of the acid-modified polyolefin resin, a known dispersion method such as a self-emulsification method and a forced emulsification method may be adopted. Also, as the aqueous dispersion, an anionic aqueous dispersion obtained by neutralizing the acid-modified polyolefin resin with a basic compound in an aqueous medium is preferable, from the viewpoint of adhesive property to ethylene-propylene-based rubber. In the case where the acid-modified polyolefin resin containing an acid anhydride as the unsaturated carboxylic acid component is aqueous dispersed, the acid anhydride component in the aqueous dispersion may be in a ring opening and/or ring closing state.

The aqueous medium contained in the aqueous dispersion is water or a liquid containing water as a main component, and may contain a basic compound and/or an organic solvent described later.

As the basic compound, any compound can be used as long as it can neutralize the carboxyl group of the acid-modified polyolefin resin, and ammonia or an organic amine compound which volatilizes at the time of coating formation is preferable from the viewpoint of water resistance of the coating. Preferred specific examples of the organic amine compound include triethylamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, 3-methoxypropylamine, monoethanolamine, morpholine, N-methylmorpholine, N-ethylmorpholine, and the like.

As the organic solvent, a water-soluble organic solvent is preferable from the viewpoint of mixing stability with the aqueous dispersion.

As the water-soluble organic solvent, one volatilizing at the time of coating formation is preferable from the viewpoint of water resistance of the coating. Preferred specific examples include ethanol, n-propanol, isopropanol, n-butanol, methyl ethyl ketone, cyclohexanone, tetrahydrofuran, dioxane, ethylene glycol monoethyl ether, ethylene glycol monopropyl ether, ethylene glycol monobutyl ether, and the like.

When aqueous dispersing the acid-modified polyolefin resin, it is preferable to adopt a dispersion method that does not substantially use a nonvolatile aqueous dispersing aid such as a surfactant, a high acid value wax, an emulsifying agent and a dispersing agent, which is arbitrarily added for the purpose of promoting dispersion, since it is excellent in water resistance of the coating and adhesive property to ethylene-propylene-based rubber. "Does not substantially use a nonvolatile aqueous dispersing aid" means that such dispersing aid is not used in the production of the aqueous dispersion and the resultant aqueous dispersion does not contain this dispersing aid as a result. Therefore, it is most preferred that the content of the aqueous dispersing aid is zero, but it may be contained within the range not detracting from the effect of the present invention. For example, the aqueous dispersing aid may be contained in an amount of 5% by mass or less, preferably 2% by mass or less, further preferably 1% by mass or less, and particularly preferably about 0.5% by mass or less, based on the acid-modified polyolefin resin.

The aqueous dispersion of the acid-modified polyolefin resin in the present invention can be mixed with and used other resin components, crosslinking agents and additives as described above. When mixed with and used other resin components, crosslinking agents and additives, it is preferable to use water soluble or aqueous dispersible ones for other resin components, crosslinking agents, additives and the like, from the viewpoint of ease of addition and mixing to the aqueous dispersion.

The number average particle diameter of the dispersed particles in the aqueous dispersion containing the acid-modified polyolefin resin is preferably 0.02 to 2 µm, more preferably 0.04 to 1 µm, and particularly preferably 0.06 to 0.5 µm, from the viewpoint of preventing viscosity increase of the aqueous dispersion and preventing occurrence of thickness unevenness of the coating.

The viscosity of the aqueous dispersion containing the acid-modified polyolefin resin measured with a Brookfield viscometer at 20°C is preferably 5000 mPa•s or less, more preferably 2000 mPa•s or less, particularly preferably 1000 mPa•s or less, and more preferably 500 mPa•s or less, and most preferably 300 mPa•s or less, from the viewpoint of ease of coating and preventing occurrence of cracks and thickness unevenness of the coating.

The pH of the aqueous dispersion containing the acid-modified polyolefin resin is preferably in the range of pH 5 to 13, more preferably in the range of 7 to 12, and particularly preferably in the range of 8 to 11, from the viewpoint of stability of the aqueous dispersion.

The method of coating the aqueous dispersion containing the acid-modified polyolefin resin on the formed article comprising the composition containing an ethylene-propylene-based rubber is not particularly limited, and it is possible to adopt known methods such as spray coating, dip coating, brush coating, shower coating, knife coating and gravure coating. The coating amount of the aqueous dispersion is preferably set so that the coating has a preferable thickness of the present invention.

After coating the aqueous dispersion containing the acid-modified polyolefin resin, it is preferable to provide a drying step. By the drying step, the aqueous medium in the aqueous dispersion volatilizes and it becomes possible to form a firm coating on the surface of the formed article. The drying method is not particularly limited, and a coating is formed by natural drying for about 2 hours. Drying by heating is preferable from the viewpoint of shortening of drying time and improvement of adhesive property. The heating method is not particularly limited, and a known method such as hot air drying, infrared heater or microwave may be adopted. As the drying conditions, the temperature is preferably 70°C or more, more preferably 80°C or more, particularly preferably 90°C or more, further preferably 100°C or more, and particularly preferably 110°C or more, from the viewpoint of drying property and adhesive property. The time is preferably 5 seconds or more, more preferably 10 seconds or more, further preferably 20 seconds or more, particularly preferably 60 seconds or more, further preferably 180 seconds or more, and most preferably 300 seconds or more.

The sealing material of the present invention obtained by such method has a coating (acid-modified polyolefin resin-containing coating) having sufficiently excellent abnormal noise-preventing property, low friction property and water repellency, performance retention under freezing related to these properties and heat resistant abnormal noise-preventing property, on the surface. In addition, according to the required performance of the sealing material of the present invention, still an additional coating may be overcoated on the surface of the acid-modified polyolefin resin-containing coating, and/or an additional coating may be primer-coated between the acid-modified polyolefin resin-containing coating and the ethylene-propylene-based rubber base material.

The sealing material of the present invention is a material intended to seal gaps and/or holes, etc. provided in a structure, and among them, it can be preferably used as a vehicle sealing material. The vehicle sealing material is a sealing material (sealing part) for sealing gaps and/or holes, etc. provided in a vehicle. Specific examples of the vehicle sealing material include a bonnet seal weather strip used around the bonnet and the engine room; a sunroof seal weather strip used around the sunroof; a trunk lid weather strip (vehicle side, door side) and back door weather strip (vehicle side, door side) used around the trunk lid and the back door; a door weather strip (vehicle side, door side) used around the door and the window such as window flame, a side roof weatherstrip, a glass run weatherstrip, a waist seal weatherstrip, a door hole seal, and the like. Among them, it can be suitably used as a weather strip such as the sunroof seal weather strip, trunk lid weather strip, back door weather strip, door weather strip, side roof weather strip, glass run weather strip or waist seal weather strip which has high requirements for abnormal noise-preventing property and low friction property.

### EXAMPLES

Hereinafter, the present invention will be specifically described with reference to examples. However, the present invention is not limited thereto.

Various characteristics were measured or evaluated by the following methods.

### 1. Characteristics of Acid-Modified Polyolefin Resin

### (1) Constitution

The constitution was determined by 1H-NMR analysis (ECA500, 500 MHz, made by JEOL Ltd.). Measurement was performed at 120°C using tetrachloroethane (d2) as a solvent.

### (2) Melting point

The melting point was determined by measuring using 10 mg of an acid-modified polyolefin resin as a sample, at a heating rate of 10°C/min. using a DSC (differential scanning calorimetry) apparatus (DSC7 made by PerkinElmer Co., Ltd.).

### (3) Weight average molecular weight

The mass average molecular weight was measured at 40°C using a GPC apparatus (HLC-8020GPC made by Tosoh Corporation, column: TSK-GEL). The mass average molecular weight was calculated in terms of TSK standard polystyrene, using orthodichlorobenzene as an eluent. When the resin was not dissolved in trichlorobenzene and the weight average molecular weight could not be measured, the melt flow rate value of the following (4) was used as an index of the molecular weight.

### (4) Melt flow rate value (MFR)

The MFR was measured according to a method according to JIS K7210: 1999 (190°C, 2.16 kg load).

### 2. Characteristics of Aqueous Dispersion Containing Acid-Modified Polyolefin Resin

### (1) Number average particle diameter of dispersed particles

The number average particle diameter was determined using a Microtrac particle analyzer (UPA 150, MODEL No. 9340, dynamic light scattering method, made by Nikkiso Co., Ltd.). The refractive index used for calculating the particle diameter was 1.50.

### (2) Viscosity

Rotational viscosity (mPa•s) at 20°C was determined using a Brookfield viscometer (DVL-BII type digital viscometer made by Tokimec, Inc.).

### 3. Freeze treatment

The samples obtained in each Example and Comparative Example were immersed so as to be fully immersed in water. Next, this was put into a thermo-hygrostat having a temperature raising and lowering repeating function, and a treatment of "keeping at -20°C for 2 hours, then rapidly raising the temperature and keeping at 40°C for 3 hours" as one cycle was carried out for 500 cycles. In addition, in each cycle, all water was frozen to ice by keeping at -20°C for 2 hours, and all the ice melted and became water by keeping at 40°C for 3 hours.

### 4. Evaluation of Samples

### (1) Coating thickness

The samples obtained in each Example and Comparative Example were cut with a cutter, the cut surface was observed with a microscope, and the thickness of the coating was measured. The thicknesses at arbitrary 50 points were obtained, and the average value was calculated.

### (2) Coating adhesive property

The samples before and after the freeze treatment were used. A knife was used to form 100 square grid notches at intervals of 1 mm vertically and horizontally on the flat part of each sample. Cellophane tape (TF-12, made by Nichiban Co., Ltd.) was stuck to the grid, and the number m of the square coating remaining on the sample surface without peeling off when the tape was stripped at once was measured, and the adhesive property was evaluated. Here, m is 100 when the coating is not peeled at all and m is 0 when all the coating is peeled off, and the closer the numerical value m is to 100, the better the adhesive property. The test was carried out with n (number of samples) = 5, and the adhesive property was evaluated by the average value (rounded off the decimal place of the mean value). In this application, the adhesive property (m) to the coating is practically 95 or more in this evaluation.

### (3) Abnormal noise-preventing property

The samples before and after the freeze treatment were used. Each sample was fixed on a top plate of a horizontal desk with a double-sided tape (thickness 80 µm), and a flat portion of a cylindrical stainless steel (25 mm (diameter) × 5 mm (height), SUS430, #800 buff polished) was placed on the flat part of the sample. The degree of sound generation when linearly moving the cylinder 20 mm at a speed of 200 mm/min while applying a load of 39.2 N vertically downward to the cylindrical stainless steel was evaluated according to the following criteria. The test was carried out in a soundproof chamber under an atmosphere of 24°C, and the sound was confirmed at a position about 300 mm or 100 mm from the sample with the ear of a person having no problem in hearing ability.

### <Criteria>

Excellent: No sound could be confirmed at the position 100 mm from the sample (most preferred level for practical use in this application);
Good: No sound could be confirmed at the position 300 mm from the sample (preferred level for practical use in this application);
Fair: Faint sounds difficult to hear could be confirmed at the position 300 mm from the sample (unproblematic level for practical use in this application); and
Poor: Sounds easy to hear could be confirmed at the position 300 mm from the sample (unusable level in this application).

### (4) Low friction property

The samples before and after the freeze treatment were used. According to JIS K7125 (Plastics-Film and sheeting- Determination of the coefficients of friction), the flat part of each sample was subjected to the measurement of the dynamic friction coefficient under the following conditions. The test was carried out with n = 10, and evaluated by the average value (rounded off to the second decimal place of the average value). The obtained measured value is preferably smaller, and is practically required to be 1.5 or less, preferably 1.0 or less, and more preferably 0.5 or less, for this application.

Mating material: Stainless steel (SUS430, # 800 buff polished)
Load: 500 g (per 50 mm × 50 mm)
Tensile speed: 100 mm/min
Measuring device: Universal material testing machine model 2001 (made by INTESCO Co., Ltd.)

### (5) Water repellency

The samples before and after the freeze treatment were used. The static surface contact angle of water was measured by the droplet method according to ISO 15989: 2004 on the flat part of each sample, and evaluated according to the following criteria. The test was carried out with n = 10, and evaluated by the average value (rounded down to the first decimal place of the average value). The obtained measured value is preferably larger, and is practically required to be 80° or more, preferably 90° or more, more preferably 100° or more, and further preferably 110° or more, for this application.

### (6) Heat resistant abnormal noise-preventing property

The samples obtained in each Example and Comparative Example were used. Each sample was fixed on a top plate of a horizontal desk with a double-sided tape (thickness 80 µm), and a flat portion of a cylindrical stainless steel (25 mm (diameter) × 5 mm (height), SUS430, #800 buff polished) was placed on the flat part of the sample. The degree of sound generation when linearly moving the cylinder 20 mm at a speed of 200 mm/min while applying a load of 39.2 N vertically downward to the stainless steel of the cylinder was evaluated according to the following criteria. The test was carried out in a soundproof chamber under an atmosphere of 50°C, and the sound was confirmed at a position about 300 mm or 100 mm from the sample with the ear of a person having no problem in hearing ability.

### <Criteria>

Excellent: No sound could be confirmed at the position 100 mm from the sample (most preferred level for practical use in this application);
Good: No sound could be confirmed at the position 300 mm from the sample (preferred level for practical use in this application);
Fair: Faint sounds difficult to hear could be confirmed at the position 300 mm from the sample (unproblematic level for practical use in this application); and
Poor: Sounds easy to hear could be confirmed at the position 300 mm from the sample (unusable level in this application).

The raw materials used in Examples and Comparative examples were as follows.

### 1. Aqueous Dispersion of Acid-Modified Polyolefin Resin

The aqueous dispersion of the acid-modified polyolefin resin was produced by the following method.

### <Production of Aqueous Dispersions (A-1, A-2) of Ethylene-Ethyl Acrylate-(Anhydrous) Maleic Acid Copolymers>

Ethylene-ethyl acrylate-maleic anhydride copolymers PO1 and PO2 were produced, based on the methods described in GB 2,091,745, US 4,617,366 and US 4,644,044. The characteristics of PO1 and PO2 are shown in Table 1.

Subsequently, a 2-liter glass container equipped with a stirrer and a heater was charged with 50 g of PO1 or PO2 obtained above, 150 g of n-propanol, 3 g of 2-dimethylaminoethanol, and 297 g of distilled water. When the mixture was stirred with a stirring blade at a rotation speed of 300 rpm, precipitation of a resin particulate matter was not observed at the bottom of the container, and it was confirmed that the resin particulate matter was in a floating state. Thus, after 10 minutes, the heater was turned on to heat the resin particulate matter while keeping this state. Then, while maintaining the temperature inside the system at 130°C, the mixture was dispersed by further stirring for 120 minutes. Thereafter, the dispersed mixture was cooled to about 80°C with stirring at a rotation speed of 300 rpm, and the inside of the system was gradually depressurized to remove n-propanol and water. After removing 300 g or more of n-propanol and water, when the temperature inside the system reached 35°C, water was added to adjust the concentration of the acid-modified polyolefin resin in the aqueous dispersion to 20% by mass. The resulting mixture was filtered under pressure through a 180-mesh stainless steel filter to obtain milky homogeneous aqueous dispersions of PO1 and PO2. The aqueous dispersion of PO1 is referred to as "A-1", and the aqueous dispersion of PO2 is referred to as "A-2".

### <Production of Aqueous Dispersions (A-3 to A-5) of Ethylene-(Meth)acrylic Acid Copolymers>

An ethylene-methacrylic acid copolymer (Nucrel AN42115C, made by DUPONT-MITSUI POLYCHEMICALS CO., LTD, hereinafter referred to as "AN42115C"), an ethylene-methacrylic acid copolymer (Nucrel N0903HC, made by DUPONT-MITSUI POLYCHEMICALS CO., LTD, hereinafter referred to as "N0903HC"), or an ethylene-methacrylic acid copolymer (Nucrel N1560, made by DUPONT-MITSUI POLYCHEMICALS CO., LTD, hereinafter referred to as "N1560") was used to produce aqueous dispersions thereof according to the following method. The characteristics of AN42115C, N0903HC and N1560 are shown in Table 1.

### (Production of Aqueous Dispersions (A-3, A-4) of AN42115C, N0903HC)

A 2-liter glass container equipped with a stirrer and a heater was charged with 75 g of AN42115C or N0903HC, 175 g of n-propanol, 20 g of 2-dimethylaminoethanol, and 230 g of distilled water. When the mixture was stirred with a stirring blade at a rotation speed of 300 rpm, precipitation of a resin particulate matter was not observed at the bottom of the container, and it was confirmed that the resin particulate matter was in a floating state. Thus, after 10 minutes, the heater was turned on to heat the resin particulate matter while keeping this state. Then, while maintaining the temperature inside the system at 150°C, the mixture was dispersed by further stirring for 120 minutes. Thereafter, the mixture was cooled to about 80°C with stirring at a rotation speed of 300 rpm, and 200 g of water was added, then the inside of the system was gradually depressurized to remove n-propanol and water. After removing 350 g or more of n-propanol and water, when the temperature inside the system reached 35°C, water was added to adjust the concentration of the acid-modified polyolefin resin in the aqueous dispersion to 20% by mass. The resulting mixture was filtered under pressure through a 180-mesh stainless steel filter to obtain a milky homogeneous aqueous dispersion of AN42115C or N0903HC. The aqueous dispersion of AN42115C is referred to as "A-3", and the aqueous dispersion of N0903HC is referred to as "A-4".

### (Production of Aqueous Dispersion (A-5) of N1560)

A 1-liter glass container equipped with a stirrer and a heater was charged with 75 g of N1560, 50 g of isopropanol, 7 g of 2-dimethylaminoethanol, and 368 g of distilled water. When the mixture was stirred with a stirring blade at a rotation speed of 300 rpm, precipitation of a resin particulate matter was not observed at the bottom of the container, and it was confirmed that the resin particulate matter was in a floating state. Thus, after 10 minutes, the heater was turned on to heat the resin particulate matter while keeping this state. Then, while maintaining the temperature inside the system at 130°C, the mixture was dispersed by further stirring for 120 minutes. Thereafter, the dispersed mixture was cooled to about 80°C with stirring at a rotation speed of 300 rpm, and the inside of the system was gradually depressurized to remove isopropanol and water. After removing 130 g or more of isopropanol and water, when the temperature inside the system reached 35°C, water was added to adjust the concentration of the acid-modified polyolefin resin in the aqueous dispersion to 20% by mass. The resulting mixture was filtered under pressure through a 180-mesh stainless steel filter to obtain a milky homogeneous aqueous dispersion of N1560 or 5990. The aqueous dispersion of N1560 is referred to as "A-5".

### <Production of Aqueous Dispersion (A-6) of Propylene-(Anhydrous) Maleic Acid Copolymer>

An aqueous dispersion was produced according to the following method, using a propylene-maleic anhydride copolymer (UMEX 1001, made by Sanyo Chemical Industries, Ltd.). The characteristics of UMEX 1001 are shown in Table 1.

A 2-liter glass container equipped with a stirrer and a heater was charged with 75 g of UMEX 1001, 200 g of tetrahydrofuran, 8 g of 2-dimethylaminoethanol, and 217 g of distilled water. When the mixture was stirred with a stirring blade at a rotation speed of 300 rpm, precipitation of a resin particulate matter was not observed at the bottom of the container, and it was confirmed that the resin particulate matter was in a floating state. Thus, after 10 minutes, the heater was turned on to heat the resin particulate matter while keeping this state. Then, while maintaining the temperature inside the system at 130°C, the mixture was dispersed by further stirring for 120 minutes. Thereafter, the dispersed mixture was cooled to about 80°C with stirring at a rotation speed of 300 rpm, and the inside of the system was gradually depressurized to remove tetrahydrofuran and water. After removing 280 g or more of tetrahydrofuran and water, when the temperature inside the system reached 35°C, water was added to adjust the concentration of UMEX 1001 in the aqueous dispersion to 20% by mass. The resulting mixture was filtered under pressure through a 180-mesh stainless steel filter to obtain a white homogeneous aqueous dispersion of UMEX 1001. The aqueous dispersion of UMEX 1001 is referred to as "A-6".

The characteristics of the acid-modified polyolefin resin used and the aqueous dispersion thereof are shown in Table 1.

**[Table 1]**

| Acid-modified polyolefin resin (A) | Monomer constitution (% by mass) | | | | | | Characteristics | | | Aqueous dispersion | |
|---|---|---|---|---|---|---|---|---|---|---|---|
| | Olefin component | | Unsaturated carboxylic acid component | | | Other component | Molecular weight | | Melting point | Name | Number average particle diameter* µm |
| | Ethylene | Propylene | Maleic anhydride | Methacrylic acid | Acrylic acid | Ethyl acrylate | Weight average molecular weight | MFR g/10 min | °C | | |
| PO1 | 80.8 | 0 | 2.6 | 0 | 0 | 16.6 | Unmeasurable | 77 | 71 | A-1 | 0.06 |
| PO2 | 91.4 | 0 | 2.5 | 0 | 0 | 6.1 | Unmeasurable | 60 | 102 | A-2 | 0.06 |
| AN42115C | 95.0 | 0 | 0 | 5.0 | 0 | 0 | Unmeasurable | 33 | 95 | A-3 | 0.20 |
| N0903HC | 91.0 | 0 | 0 | 9.0 | 0 | 0 | Unmeasurable | 3 | 100 | A-4 | 0.18 |
| N1560 | 85.0 | 0 | 0 | 15.0 | 0 | 0 | Unmeasurable | 60 | 90 | A-5 | 0.05 |
| UMEX 1001 | 0 | 97.5 | 2.5 | 0 | 0 | 0 | 40100 | - | 145 | A-6 | 0.18 |

| | | | | | | | | | | | |
|---|---|---|---|---|---|---|---|---|---|---|---|
| The % by mass in the table is a value based on 100% by mass of the acid-modified polyolefin resin | | | | | | | | | | | |

### Example 1

"A-1" was used as an aqueous dispersion of the acid-modified polyolefin resin. "A-1" was diluted 1.2-fold with IPA to obtain an aqueous dispersion containing an acid-modified polyolefin resin. The aqueous dispersion was dip-coated on an ethylene-propylene-diene rubber sheet (black EPT, size 150 mm × 150 mm, made by ORION S.A.) with a thickness of 2 mm. Immediately after coating, it was dried with a hot air dryer at 110°C for 10 minutes to obtain a sample for evaluation in which a coating containing an acid-modified polyolefin resin was formed on the entire surface of the ethylene-propylene-diene rubber sheet.

### Examples 2 to 5, Comparative Example 6

Samples for evaluation were obtained in the same manner as in Example 1 except that each of the aqueous dispersions of the acid-modified polyolefin resins shown in Tables 2 to 3 was used, instead of "A-1" as the aqueous dispersion of the acid-modified polyolefin resin.

### Examples 6 to 8

Samples for evaluation were obtained in the same manner as in Example 2 except that the dilution ratio for diluting "A-2" with IPA was changed to 4-fold dilution in Example 6, 30-fold dilution in Example 7, and 40-fold dilution in Example 8.

### Example 9

A sample for evaluation was obtained in the same manner as in Example 1 except that, using "A-2" as the aqueous dispersion of the acid-modified polyolefin resin and an oxazoline-based crosslinking agent (EPOCROS WS-700, made by NIPPON SHOKUBAI CO., LTD., solid concentration: 25% by mass, hereinafter referred to as "WS700") as a crosslinking agent, both were mixed so that acid-modified polyolefin resin/oxazoline-based crosslinking agent was 95/5, in terms of the solid content mass ratio of each, and an aqueous dispersion containing an acid-modified polyolefin resin obtained by diluting the mixture 1.2-fold with IPA was used.

### Example 10

A sample for evaluation was obtained in the same manner as in Example 1 except that, using "A-2" as the aqueous dispersion of the acid-modified polyolefin resin and a blocked isocyanate-based crosslinking agent (Aqua BI 200, made by Chemtura Corporation, solid concentration: 40% by mass, hereinafter referred to as "BI200") as a crosslinking agent, both were mixed so that acid-modified polyolefin resin/blocked isocyanate-based crosslinking agent was 90/10, in terms of the solid content mass ratio of each, and an aqueous dispersion containing an acid-modified polyolefin resin obtained by diluting the mixture 1.2-fold with IPA was used.

### Example 11

A sample for evaluation was obtained in the same manner as in Example 1 except that, using "A-2" as the aqueous dispersion of the acid-modified polyolefin resin and an carbodiimide-based crosslinking agent (CARBODILITE E-02, made by Nisshinbo Chemical Inc., solid concentration: 40% by mass, hereinafter referred to as "E-02") as a crosslinking agent, both were mixed so that acid-modified polyolefin resin/carbodiimide-based crosslinking agent was 95/5, in terms of the solid content mass ratio of each, and an aqueous dispersion containing an acid-modified polyolefin resin obtained by diluting the mixture 1.2-fold with IPA was used.

### Example 12

A sample for evaluation was obtained in the same manner as in Example 1 except that, using "A-2" as the aqueous dispersion of the acid-modified polyolefin resin and an aqueous dispersion of an aromatic polyether polyurethane resin (SUPERFLEX 870, made by DKS Co. Ltd., solid concentration: 30% by mass, hereinafter referred to as "SF870") as other resin component, both were mixed so that acid-modified polyolefin resin/polyurethane resin was 95/5, in terms of the solid content mass ratio of each, and an aqueous dispersion containing an acid-modified polyolefin resin obtained by diluting the mixture 1.2-fold with IPA was used.

### Example 13

A sample for evaluation was obtained in the same manner as in Example 12 except that both were mixed so that acid-modified polyolefin resin/polyurethane resin was 10/90, in terms of the solid content mass ratio of each, and an aqueous dispersion containing an acid-modified polyolefin resin obtained by diluting the mixture 2-fold with IPA was used.

### Example 14

A sample for evaluation was obtained in the same manner as in Example 1 except that, using "A-2" as the aqueous dispersion of the acid-modified polyolefin resin and an aqueous dispersion of an aliphatic polyether polyurethane resin (VONDIC 2260NE, made by DIC Corporation, solid concentration: 40% by mass, hereinafter referred to as "2260NE") as other resin component, both were mixed so that acid-modified polyolefin resin/polyurethane resin was 95/5, in terms of the solid content mass ratio of each, and an aqueous dispersion containing an acid-modified polyolefin resin obtained by diluting the mixture 1.2-fold with IPA was used.

### Example 15

A sample for evaluation was obtained in the same manner as in Example 14 except that both were mixed so that acid-modified polyolefin resin/polyurethane resin was 10/90, in terms of the solid content mass ratio of each, and an aqueous dispersion containing an acid-modified polyolefin resin obtained by diluting the mixture 2-fold with IPA was used.

### Example 16

A sample for evaluation was obtained in the same manner as in Example 1 except that, using "A-2" as the aqueous dispersion of the acid-modified polyolefin resin and an aqueous dispersion of an aliphatic polycarbonate polyurethane resin (Sancure PC-55, made by The Lubrizol Corporation, solid concentration: 40% by mass, hereinafter referred to as "PC55") as other resin component, both were mixed so that acid-modified polyolefin resin/polyurethane resin was 95/5, in terms of the solid content mass ratio of each, and an aqueous dispersion containing an acid-modified polyolefin resin obtained by diluting the mixture 1.2-fold with IPA was used.

### Example 17

A sample for evaluation was obtained in the same manner as in Example 16 except that both were mixed so that acid-modified polyolefin resin/polyurethane resin was 10/90, in terms of the solid content mass ratio of each, and an aqueous dispersion containing an acid-modified polyolefin resin obtained by diluting the mixture 2-fold with IPA was used.

### Example 18

A sample for evaluation was obtained in the same manner as in Example 1 except that, using "A-2" as the aqueous dispersion of the acid-modified polyolefin resin and "PC55" as other resin component, both were mixed so that acid-modified polyolefin resin/polyurethane resin was 10/90, in terms of the solid content mass ratio of each, and using "BI200" as a crosslinking agent in the mixture, both were mixed so that mixture of acid-modified polyolefin resin and polyurethane resin/blocked isocyanate-based crosslinking agent was 90/10, in terms of the solid content ratio of each, and an aqueous dispersion containing an acid-modified polyolefin resin obtained by diluting the mixture 2-fold with IPA was used.

### Example 19

A sample for evaluation was obtained in the same manner as in Example 18 except that, using "E-02" instead of "BI200" as a crosslinking agent, both were mixed so that mixture of acid-modified polyolefin resin and polyurethane resin/carbodiimide-based crosslinking agent was 95/5, in terms of the solid content ratio of each.

### Example 20

A sample for evaluation was obtained in the same manner as in Example 1 except that, using "A-2" as the aqueous dispersion of the acid-modified polyolefin resin and "PC55" and "2260NE" as other resin components, both were mixed so that acid-modified polyolefin resin/aliphatic polycarbonate polyurethane resin/aliphatic polyether polyurethane resin was 10/85/5, in terms of the solid content mass ratio of each, and using "BI200" as a crosslinking agent in the mixture, both were mixed so that mixture of acid-modified polyolefin resin and polyurethane resin/blocked isocyanate-based crosslinking agent was 90/10, in terms of the solid content ratio of each, and an aqueous dispersion containing an acid-modified polyolefin resin obtained by diluting the mixture 2-fold with IPA was used.

### Example 21

A sample for evaluation was obtained in the same manner as in Example 20 except that, using "E-02" instead of "BI200" as a crosslinking agent, both were mixed so that mixture of acid-modified polyolefin resin and polyurethane resin/carbodiimide-based crosslinking agent was 95/5, in terms of the solid content ratio of each.

### Example 22

A sample for evaluation was obtained in the same manner as in Example 1 except that, using "A-2" as the aqueous dispersion of the acid-modified polyolefin resin and an aqueous dispersion of a silicone resin (silicone emulsion KM-9739, made by Shin-Etsu Chemical Co., Ltd., solid concentration: 30% by mass, hereinafter referred to as "KM9739") as other resin component, both were mixed so that acid-modified polyolefin resin/silicone resin was 95/5, in terms of the solid content mass ratio of each, and an aqueous dispersion containing an acid-modified polyolefin resin obtained by diluting the mixture 1.2-fold with IPA was used.

### Example 23

A sample for evaluation was obtained in the same manner as in Example 22 except that both were mixed so that acid-modified polyolefin resin/silicone resin was 10/90, in terms of the solid content mass ratio of each, and an aqueous dispersion containing an acid-modified polyolefin resin obtained by diluting the mixture 2-fold with IPA was used.

### Example 24

The acid-modified polyolefin resin "PO2" was dissolved in hot toluene to obtain a PO2 toluene solution having a solid concentration of 5% by mass. The aqueous dispersion was dip-coated on an ethylene-propylene-diene rubber sheet (black EPT, size 150 mm × 150 mm, made by ORION S.A.) with a thickness of 2 mm. Immediately after coating, it was dried with a hot air dryer at 110°C for 10 minutes. Operation of dip coating and drying was repeated 5 times (for achieving the intended thickness) to obtain a sample for evaluation in which a coating containing an acid-modified polyolefin resin was formed on the entire surface of the ethylene-propylene-diene rubber sheet.

### Comparative Example 1

An aqueous dispersion of an aliphatic polyether polyurethane resin "2260NE" was diluted 2-fold with IPA, and the aqueous dispersion was dip-coated on an ethylene-propylene-diene rubber sheet (black EPT, size 150 mm × 150 mm, made by ORION S.A.) with a thickness of 2 mm. Immediately after coating, it was dried with a hot air dryer at 110°C for 10 minutes to obtain a sample for evaluation in which a coating made of an aliphatic polyether polyurethane resin was formed on the entire surface of the ethylene-propylene-diene rubber sheet.

### Comparative Example 2

Using an aqueous dispersion of a polyurethane resin "PC55" and a blocked isocyanate-based crosslinking agent "BI200", both were mixed so that polyurethane resin/blocked isocyanate-based crosslinking agent was 90/10, in terms of the solid content ratio of each. Subsequently, the mixture was diluted 2-fold with IPA, and then dip-coated on an ethylene-propylene-diene rubber sheet (black EPT, size 150 mm × 150 mm, made by ORION S.A.) with a thickness of 2 mm. Immediately after coating, it was dried with a hot air dryer at 110°C for 10 minutes to obtain a sample for evaluation in which a coating made of a mixture of the polyurethane resin and the crosslinking agent was formed on the entire surface of the ethylene-propylene-diene rubber sheet.

### Comparative Example 3

Using an aqueous dispersion of a polyurethane resin "PC55" and a carbodiimide-based crosslinking agent "E-02", both were mixed so that polyurethane resin/carbodiimide-based crosslinking agent was 95/5, in terms of the solid content ratio of each. Subsequently, the blend was diluted 2-fold with IPA, and then dip-coated on an ethylene-propylene-diene rubber sheet (black EPT, size 150 mm × 150 mm, made by ORION S.A.) with a thickness of 2 mm. Immediately after coating, it was dried with a hot air dryer at 110°C for 10 minutes to obtain a sample for evaluation in which a coating made of a mixture of the polyurethane resin and the crosslinking agent was formed on the entire surface of the ethylene-propylene-diene rubber sheet.

### Comparative Example 4

Using aqueous dispersions of polyurethane resins "PC55" and "2260NE" and a carbodiimide-based crosslinking agent "E-02", three were mixed so that aliphatic polycarbonate polyurethane resin/aliphatic polyether polyurethane resin/carbodiimide-based crosslinking agent was 90/5/5, in terms of the solid content ratio of each. Subsequently, the blend was diluted 2-fold with IPA, and then dip-coated on an ethylene-propylene-diene rubber sheet (black EPT, size 150 mm × 150 mm, made by ORION S.A.) with a thickness of 2 mm. Immediately after coating, it was dried with a hot air dryer at 110°C for 10 minutes to obtain a sample for evaluation in which a coating made of a mixture of the polyurethane resin and the crosslinking agent was formed on the entire surface of the ethylene-propylene-diene rubber sheet.

### Comparative Example 5

An aqueous dispersion of a silicone resin "KM9739" was diluted 1.5-fold with IPA, and the aqueous dispersion was dip-coated on an ethylene-propylene-diene rubber sheet (black EPT, size 150 mm × 150 mm, made by ORION S.A.) with a thickness of 2 mm. Immediately after coating, it was dried with a hot air dryer at 110°C for 10 minutes to obtain a sample for evaluation in which a coating made of a silicone resin was formed on the entire surface of the ethylene-propylene-diene rubber sheet.

The samples obtained in Examples 1 to 24 and Comparative Examples 1 to 6 were used to perform various evaluations. Evaluation results are shown in Tables 2 to 5.

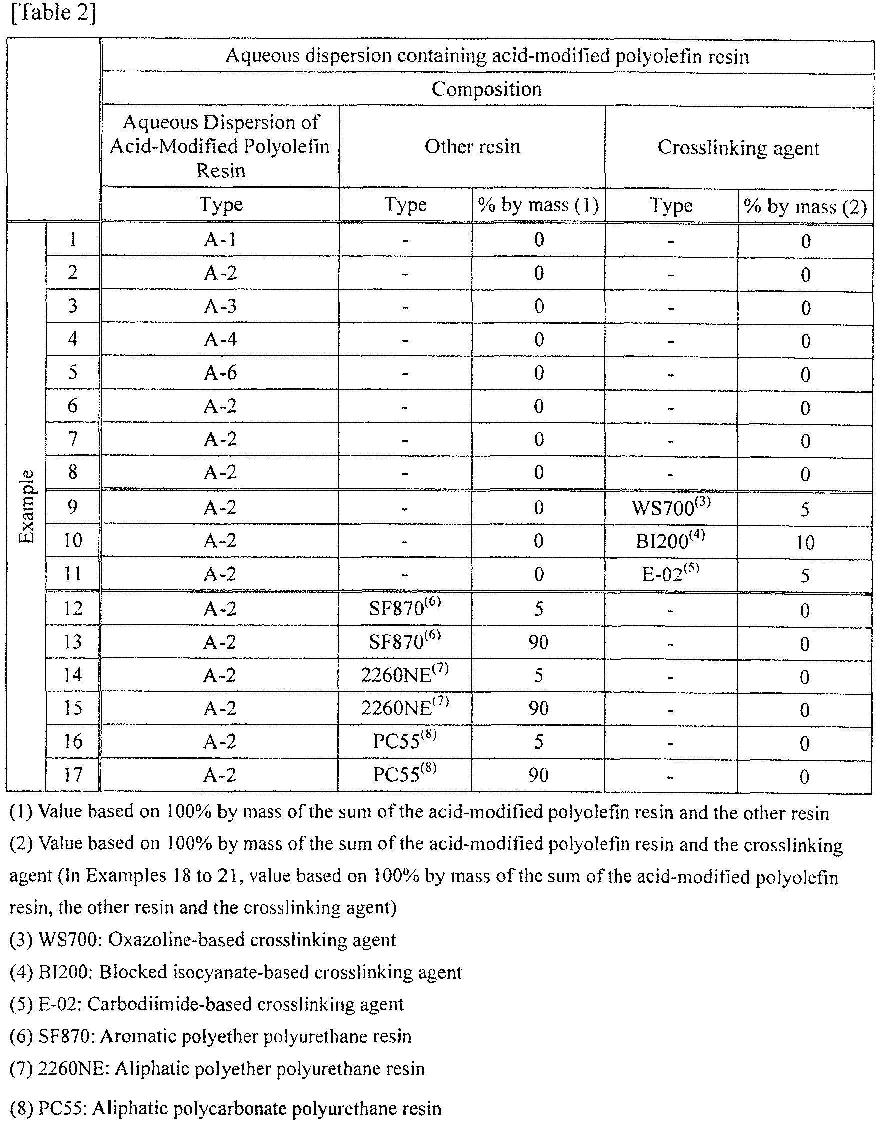

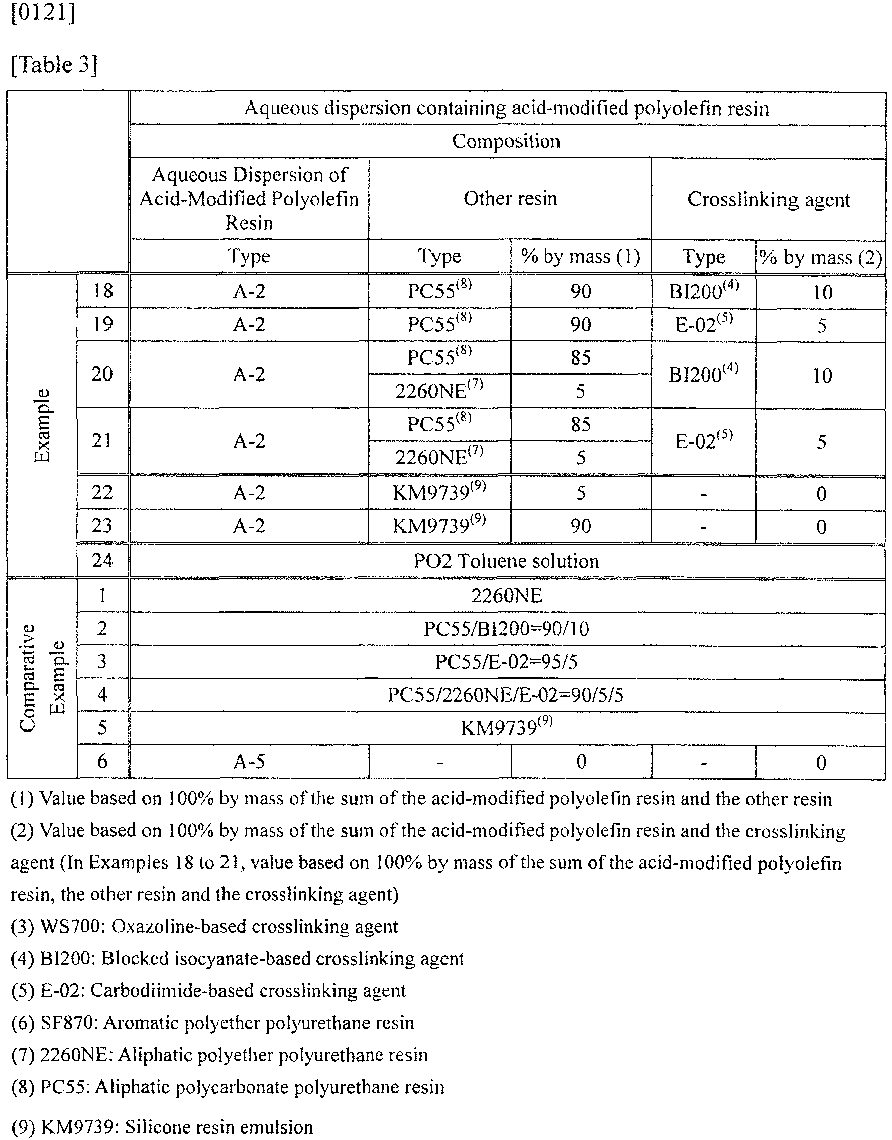

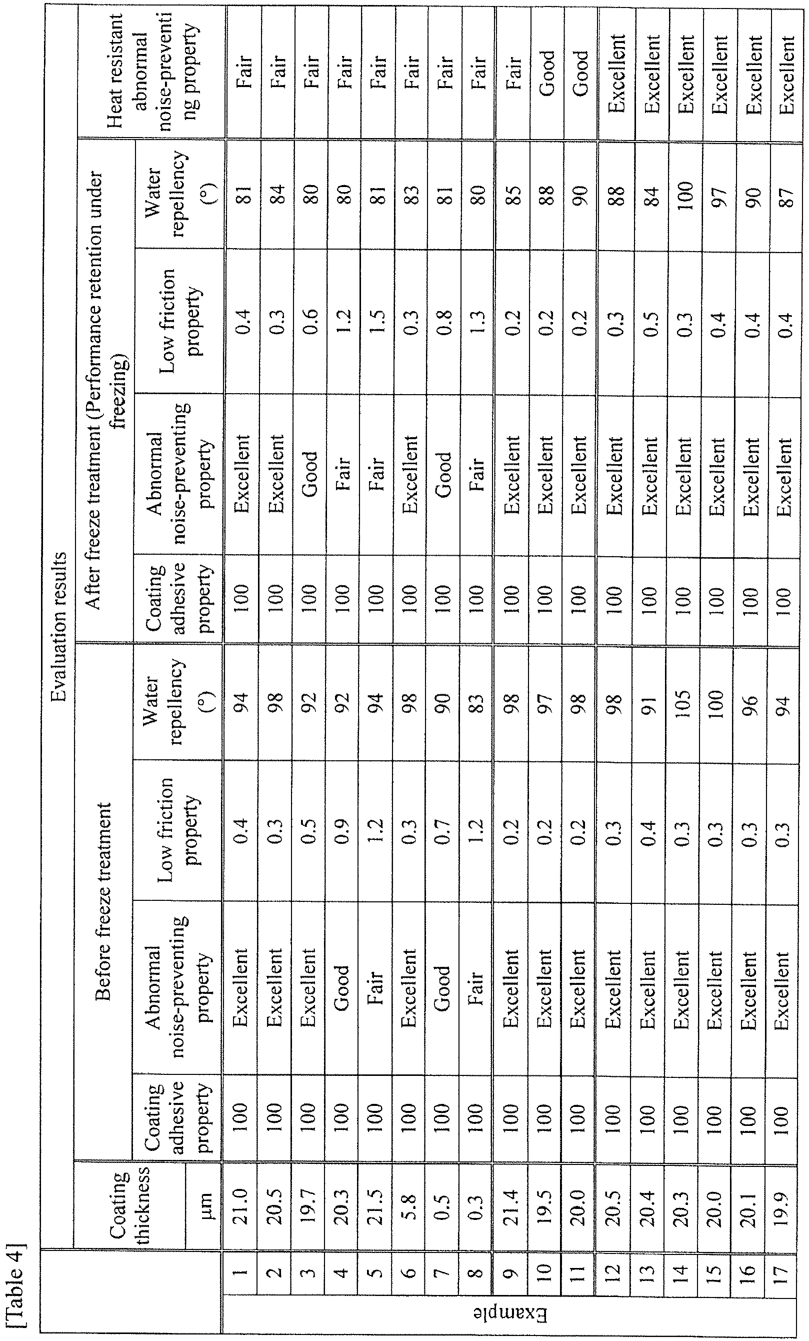

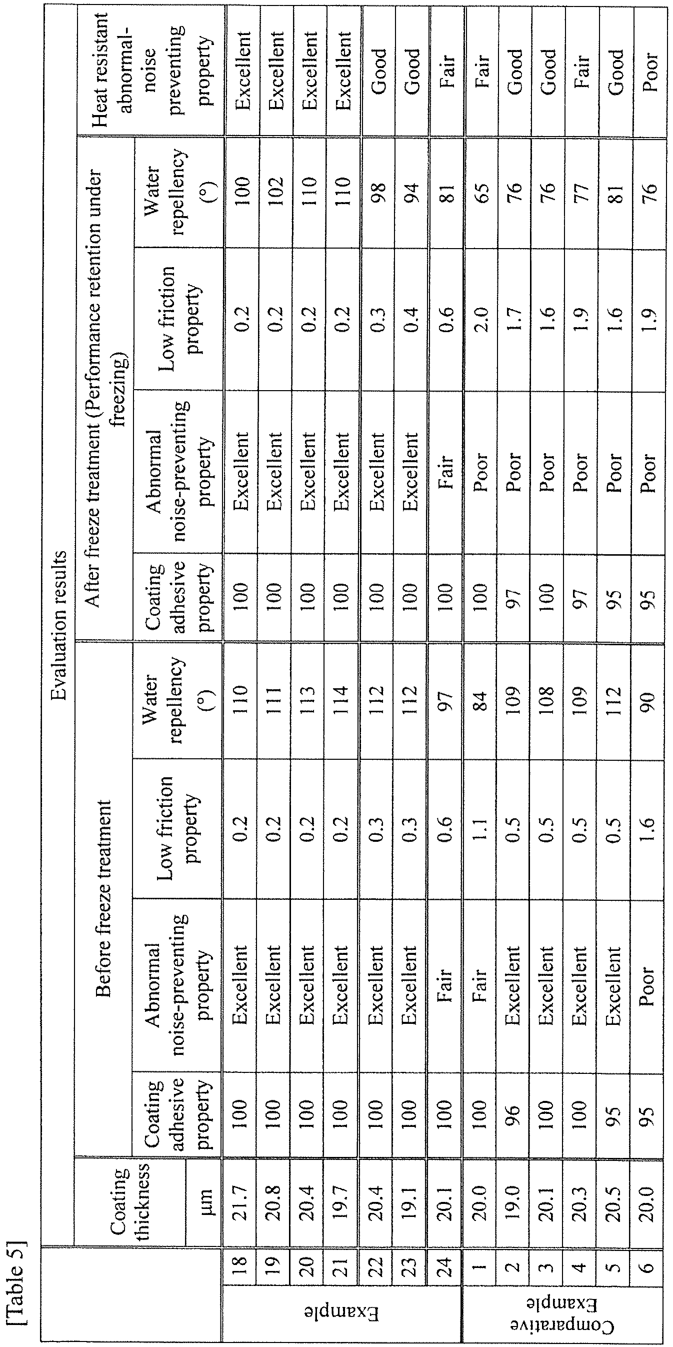

In Examples 1 to 24, the sealing material was excellent in adhesive property between the ethylene-propylene-based rubber (sealing member) and the coating, abnormal noise-preventing property, low friction property and water repellency, and also excellent in performance retention under freezing related to these properties, and heat resistant abnormal noise-preventing property.

When comparing Examples 1 to 5, the olefin component of the acid-modified polyolefin resin of ethylene was superior to that of propylene, in abnormal noise-preventing property and low friction property, and performance retention under freezing related to these properties. In addition, the olefin component containing (meth)acrylate ester was further excellent in performance retention under freezing related to abnormal noise-preventing property and low friction property.

When comparing Examples 2 and 6 to 8, it could be confirmed that the thickness of the coating influences abnormal noise-preventing property, low friction property and water repellency, and performance retention under freezing related to these properties.

In Examples 9 to 11, it could be confirmed that abnormal noise-preventing property, low friction property and water repellency are further excellent, and heat resistance abnormal noise-preventing property is improved, by containing the crosslinking agent in the coating, regardless of whether or not the freeze treatment is carried out.

In Examples 12 to 23, it could be confirmed that abnormal noise-preventing property, low friction property and water repellency are further excellent, and particularly, heat resistance abnormal noise-preventing property is further excellent, by containing the acid-modified polyolefin resin and other resins such as the polyurethane resin and/or the silicone resin in the coating, regardless of whether or not the freeze treatment is carried out. Further, as in Examples 13, 15, 17 to 21, and 23, it could be confirmed that various performances are excellent even when the content of the acid-modified polyolefin resin is small.

In particular, in Examples 18 to 21, it could be confirmed that water repellency and performance retention under freezing thereof are further improved, by containing both of the crosslinking agent and other resin in the coating.

On the other hand, in Comparative Examples 1 to 4, the coating contained the polyurethane resin, but did not contain the acid-modified polyolefin resin, thus it was inferior in performance retention under freezing related to abnormal noise-preventing property, low friction property and water repellency.

In Comparative Example 5, the coating contained the silicone resin, but did not contain the acid-modified polyolefin resin, thus it was inferior in performance retention under freezing related to abnormal noise-preventing property and low friction property.

In Comparative Example 6, since the unsaturated carboxylic acid content of the acid-modified polyolefin resin exceeded the range specified in the present invention, thus it was inferior in performance retention under freezing related to abnormal noise-preventing property, low friction property and water repellency, and heat resistance abnormal noise-preventing property.

In the evaluation of the present examples, a sheet-shaped sample not having the shape of the vehicle sealing material is used. However, considering the purpose of this evaluation, even when the sheet does not have the shape of the vehicle sealing material, practical evaluation of this application is possible with a sheet-shaped sample.

### INDUSTRIAL APPLICABILITY

The sealing material of the present invention is useful as, for example, a vehicle sealing material.

## Claims

1. A sealing material, comprising:
a sealing member containing an ethylene-propylene-based rubber, and
a coating containing an acid-modified polyolefin resin having an unsaturated carboxylic acid content of 0.1 to 10% by mass, that is formed on at least a portion of the surface of the sealing member.

2. The sealing material of Claim 1, wherein the acid-modified polyolefin resin contains a (meth)acrylic ester component as a copolymerization component.

3. The sealing material of Claim 2, wherein a content of the (meth)acrylic ester component is 1 to 45% by mass of the acid-modified polyolefin resin.

4. The sealing material of any one of Claim 1 to Claim 3, wherein the coating further contains a crosslinking agent and/or other resin.

5. The sealing material of Claim 4, wherein the other resin contains a polyurethane resin and/or a silicone resin.

6. The sealing material of Claim 4, wherein the other resin contains an aliphatic polyether polyurethane resin and/or an aliphatic polycarbonate polyurethane resin.

7. The sealing material of any one of Claim 4 to Claim 6, wherein a content of the other resin is 1 to 99% by mass, based on 100% by mass of the sum of the acid-modified polyolefin resin and the other resin.

8. The sealing material of any one of Claim 4 to Claim 7, wherein a content of the crosslinking agent is from 0.2 to 30% by mass, based on 100% by mass of the sum of the acid-modified polyolefin resin, the crosslinking agent, and the other resin.

9. The sealing material of any one of Claim 1 to Claim 8, wherein the coating is a coating film of an aqueous dispersion containing the acid-modified polyolefin resin having an unsaturated carboxylic acid content of 0.1 to 10% by mass.

10. The sealing material of any one of Claim 1 to Claim 9, wherein the sealing material is a vehicle sealing material.

11. The sealing material of any one of Claim 1 to Claim 10, wherein the acid-modified polyolefin resin comprises one or more kinds of monomers selected from alkenes having 2 to 4 carbon atoms and one or more monomers selected from acrylic acid, methacrylic acid, maleic acid, maleic anhydride and mixtures thereof, as copolymerization components.

12. A method for producing a sealing material, comprising:
coating an aqueous dispersion containing an acid-modified polyolefin resin having an unsaturated carboxylic acid content of 0.1 to 10% by mass, on at least a portion of the surface of a sealing member containing an ethylene-propylene-based rubber.

13. A coating composition for a sealing material containing an ethylene-propylene-based rubber,
which is an aqueous dispersion containing an acid-modified polyolefin resin having an unsaturated carboxylic acid content of 0.1 to 10% by mass and an aqueous medium.

14. The coating composition for a sealing material of Claim 13, wherein the acid-modified polyolefin resin contains a (meth)acrylic ester component as a copolymerization component.

15. The coating composition for a sealing material of Claim 14, wherein a content of the (meth)acrylic ester component is 1 to 45% by mass of the acid-modified polyolefin resin.

16. The coating composition for a sealing material of any one of Claim 13 to Claim 15, wherein the coating composition for a sealing material further contains a crosslinking agent and/or other resin.

17. The coating composition for a sealing material of Claim 16, wherein the other resin contains a polyurethane resin and/or a silicone resin.

18. The coating composition for a sealing material of Claim 16, wherein the other resin contains an aliphatic polyether polyurethane resin and/or an aliphatic polycarbonate polyurethane resin.

19. The coating composition for a sealing material of any one of Claim 16 to Claim 18, wherein a content of the other resin component is 1 to 99% by mass, based on 100% by mass of the sum of the acid-modified polyolefin resin and the other resin.

20. The coating composition for a sealing material of any one of Claim 16 to Claim 19, wherein a content of the crosslinking agent is from 0.2 to 30% by mass, based on 100% by mass of the sum of the acid-modified polyolefin resin, the crosslinking agent, and the other resin.

21. The coating composition for a sealing material of any one of Claim 13 to Claim 20, wherein the acid-modified polyolefin resin comprises one or more kinds of monomers selected from alkenes having 2 to 4 carbon atoms, and one or more monomers selected from acrylic acid, methacrylic acid, maleic acid, maleic anhydride and mixtures thereof, as copolymerization components.
